# EUROPEAN PATENT APPLICATION

(11) **EP 1 975 553 A1**
(43) Date of publication of application: **01.10.2008**
(21) Application number: 07105117.1
(22) Date of filing: 28.03.2007
(51) Int. Cl.: G01B 11/06

(54) **System for measurement**

(71) Applicant: ABB Research Ltd., 8050 Zürich (CH)
(72) Inventor: Saarinen, Kari, 722 17, VÄSTERÅS (SE)
(74) Representative: Holmberg, Nils Anders Patrik

(57) **Abstract**

The present invention relates to a non-contact system for sensing and measuring a property or characteristic of a web material moving along a feed path, the system comprising a fixed support structure (14) arranged with a passage through which the web material (13) moves along the feed path, sensors (10,12) positioned adjacent opposite sides of the web, distance holding means for holding the sensors substantially evenly spaced from said web at a distance (d) between said sensors, a light source (36) emitting a light beam onto each side of the web at an angle, a beam splitter (40) arranged with each sensor, for diverting a part of said light beam, light receiving means (44) fixedly attached to said support structure adjacent said first and second sensors respectively, and capable of receiving said diverted part of the light beam as well as light reflected from said web from the light beam emitted onto said web, means for calculating the air gap between each of said sensors and said web from information of the received light beams, and means for calculating the thickness of said web from the calculations of the air gaps and from the measured distance between the sensors.

## Description

### TECHNICAL AREA

The present invention relates to a method and system for measurement in production and in particular to thickness measurements in paper making production.

### TECHNICAL BACKGROUND

Accurate caliper (thickness of paper sheet) measurement and control are critical features for paper production. It is thus very important to be able to measure on-line during paper production and to use the measurements as feed-back to the production unit.

Many systems and devices have been developed for handling this type of measurements. One very successful device is the Measure IT Caliper Measurement GT4230 developed by ABB, providing very high accuracy speed of response and streak resolution for optimum cross-direction caliper control and process analysis. It comprises sensing planes or shoes arranged on opposite sides of the paper sheet sliding over and under the paper web, with a very light touch to the web. The shoes include sensors for measuring caliper, where one shoe is arranged with an electromagnetic core and a main body of boron carbide and ferrite on the other shoe. A flux path is established through the core, the sheet of paper and the ferrite. The gap between the core and the ferrite varies according to the caliper of the moving sheet of paper, and as the gap varies the inductance of the coil changes. This inductance change signal is used to measure the caliper.

However, for some applications and especially some paper grades, contacting measurement is impractical or problematic, because it can lead to build-up on sensors, scratches and/or damages. As example, sensitive surface grades, matt coatings, high-gloss grades, SC grades and 100% recycled board products may be mentioned. Also soft coating and other deposits which build up on sensors will make measurement inaccurate and result in sheet damages. Most tissue and towel products may get damaged by any contacting sensor. Further, sensors which pinch the sheet on both sides may cause the sheet to break if there is for example a lump, a hole, pitch or other sticky build-up on the sheet.

Solutions have therefore been developed for non-contact caliper measurements. One example is disclosed in the patent application US 2006/0132808. The apparatus disclosed comprises a first sensor head and a second sensor head that are spaced apart to define a path through which a paper web moves. The sensor projects a laser generated multi-point pattern in the upper surface of the web. A pattern recognition algorithm analysis of the pattern identifies the orientation, for example the tilt, of the moving web. The device further measures the distance between the first sensor head and the first web surface, the distance between the second sensor head and the second web surface, and the distance between the two sensor heads to provide a triangulator measurement of the thickness of the web.

However, the accuracy of this type of triangulator measurement alone does not provide the accuracy required for many applications. There is thus need for further improvements in the area of contact-less caliper measurements.

### BRIEF DESCRIPTION OF THE INVENTION

The aim of the present invention is to provide a novel and improved method and device for contact-less measurement of caliper of a moving web.

This aim is achieved by the features of the independent patent claims. Preferable embodiments of the present invention form subject of the dependent patent claims.

According to a main object of the present invention, it is characterised by a non-contact system for sensing and measuring a property or characteristic of a web material moving along a feed path, the system comprising a fixed support structure arranged with a passage through which the web material moves along the feed path, a first and second flexible mount attached to said support structure on a first side and second side of said feed path, a first and second sensor attached to said first and second flexible mount and positioned adjacent said first and second side of said feed path, where said first and second flexible mounts permit movement of said sensors relative to said feed path, first and second sensors including means for receiving and directing pressurised gas toward said web when in said feed path, said first and second sensors being positioned opposite one another across said feed path, at least one magnet mounted in each of said first and second sensors, said magnets being aligned with each other by magnetic coupling to urge said sensors toward said web and one another with said gas directed toward said web from said first and second sensors forming gas bearings to simultaneously urge said sensors away from said web, a net force generated by said magnets and said gas bearings keeping said sensors substantially evenly spaced from said web passing along said feed path, said sensors further comprising measurement means capable of continuously measuring the distance (d) between said sensors, characterised in that it further comprises a light source arranged in each of said sensors, capable of emitting a light beam onto said web moving in said feed path at an inclined angle in relation to said web, that each sensor is arranged with a beam splitter, capable of diverting a part of said light beam, first and second light receiving means fixedly attached to said support structure adjacent said first and second sensors respectively, and arranged such that they are capable of receiving said diverted part of the light beam as well as light reflected from said web from the light beam emitted onto said web, means for calculating the air gap between each of said sensors and said web from information of the received light beams, and means for calculating the thickness of said web from the calculations of the air gaps and from the measured distance between the sensors.

According to another object of the invention, said light receiving means comprises a CCD array attached to said fixed structure capable of obtaining images of the diverted light beam as well as the reflected light beam.

According to a further object of the invention, the light receiving means further comprises lens arrangements attached to said structure, capable of directing said light beams toward said CCD array.

With the present invention, very accurate thickness measurements of a paper web running along a feed path can be obtained.

Due to the fact that only the light source and a splitter are arranged on the sensors, and that they can have a low weight, they will not influence the function of the sensors due to the weight. On the other hand, since the light receiving means and possible optics are attached to the fixed structure, it is possible to use larger and/or sturdier equipment than could otherwise be used if they were to be included in the sensors, such as with known systems. There is thus a freedom of choosing the best suited equipment without having to take into account any weight aspects. Also, because they are attached to the sturdy structure, the operation of the system will not be affected by possible moving parts or vibrations. Thus a reliable and undisturbed receiving of the light beams can be obtained and therefore a reliable and continuous measuring of the caliper is ensured.

These and other aspects of and advantages with the present invention will become apparent from the following detailed description and from the accompanying drawings.

### BRIEF DESCRIPTION OF THE DRAWINGS

In the following detailed description of the invention, reference will be made to the accompanying drawings, of which
- Fig. 1: shows schematically a measuring unit according to the present invention,
- Fig. 2: shows a detailed view of a part of the measuring unit of Fig. 1, and
- Fig. 3: shows a curve of the intensity distribution of light on a CCD array.

### DETAILED DESCRIPTION OF THE INVENTION

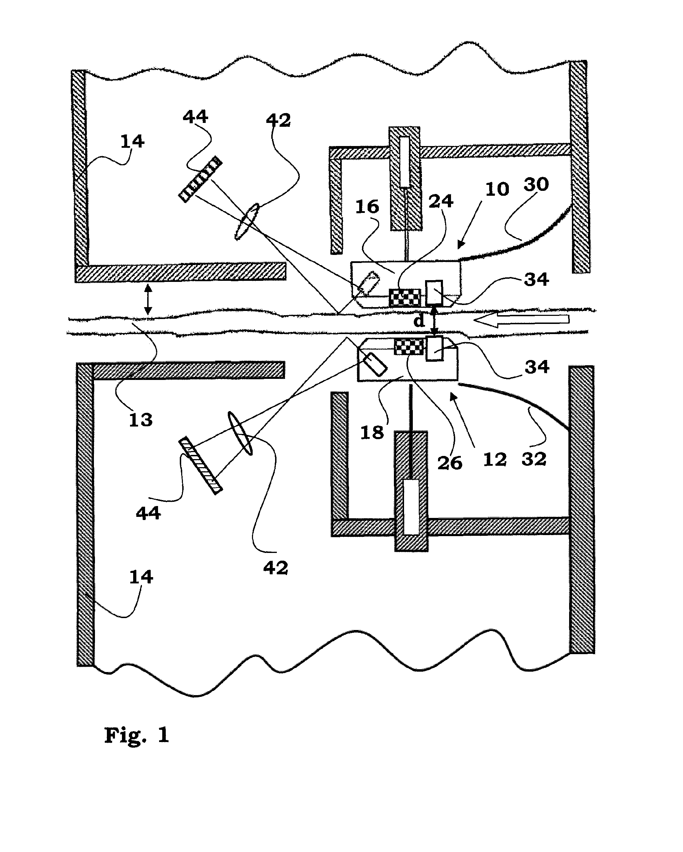

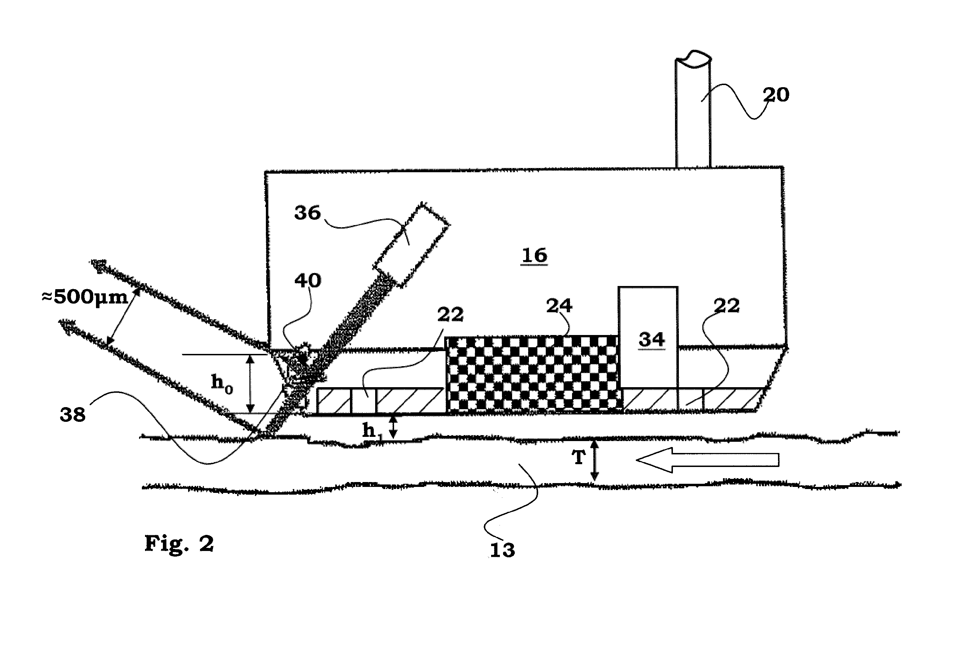

An embodiment of the present invention is shown in Figures 1 and 2. The embodiment shown comprises a top sensor unit 10 and a bottom sensor unit 12 arranged to a fixed support structure 14 providing a passage through which a web 13 is able to move along a feed path. The fixed structure is mounted into a platform in which a complete sensor package, as will be disclosed below, is traversing a web running along the feed path. One example of such a platform is ABB SP 700 scanning platform, a very strong measurement foundation for on-line scanning sensors.

Distance holding means are arranged for holding the sensors substantially evenly spaced from said web passing along said feed path. The distance holding means comprise the following: each sensor unit comprises an air bearing unit 16, 18 in accordance with the system disclosed in patent No. US 6,588,118. The first air bearing unit includes an inlet passage 20, Fig. 2, for receiving pressurized gas and outlet passages 22 for directing the gas toward the web when it is present in the feed path. The second air bearing unit also includes an inlet passage for receiving pressurized gas and outlet passages for directing the gas toward the web in the feed path. At least one magnet 24, 26 is mounted in each of the first and second air bearing units, with the magnet 24 of the first unit being aligned with and attracted to the magnet 26 of the second unit and forming a magnetic coupling. This magnetic coupling urges the units toward the corresponding side of the web and one another, with the gas directed toward the web from the first and second units forming gas bearings that simultaneously urge the units away from the web. As a result, a net force generated by the magnets and the gas bearings keeps the air bearing units substantially evenly spaced from the web passing along the feed path.

To permit relative movement of the sensors in the vertical plane, a first flexible mount 30 is arranged between the first air bearing unit and support structure and a second flexible mount 32 is arranged between the second air bearing unit and the support structure. This relative movement capability ensures that the first and second units may remain substantially parallel to the passing web of material at all times, even during changes in the pass line and the process itself. At least one of the first and second flexible mounts may also permit movement of the associated unit in the horizontal plane. However, as should be appreciated, the associated unit is prevented from moving any significant distance in this plane relative to the other unit when the first and second units are magnetically coupled to one another.

The air bearing units are further arranged with first and second inductor coils 34 in the respective unit. The coils are connected to suitable electronics via wires for measuring the gap size d by means of magnetic induction coupling, which principle is well known in the art.

Each sensor unit further comprises a light source, e.g. a laser 36, capable of emitting a light beam, Fig. 2. The light beam is directed towards the moving paper web through a micro lens 38 at a certain angle in relation to the web. A beam splitter 40 is arranged in the path of the light beam, capable of directing a part of the light beam in a direction 90° in relation to the main beam. The light source, micro lens and beam splitter are preferably rather light in order not to disturb or affect the function of the sensor units.

A lens 42 and a CCD array 44 are fixedly attached to the support structure 14. The CCD array is capable of receiving and registering of the split beam. The reflected light from the web is also directed towards the CCD array, and received and registered there. The CCD array is connected to suitable electronics comprising software capable of handling the images obtained from the CCD array.

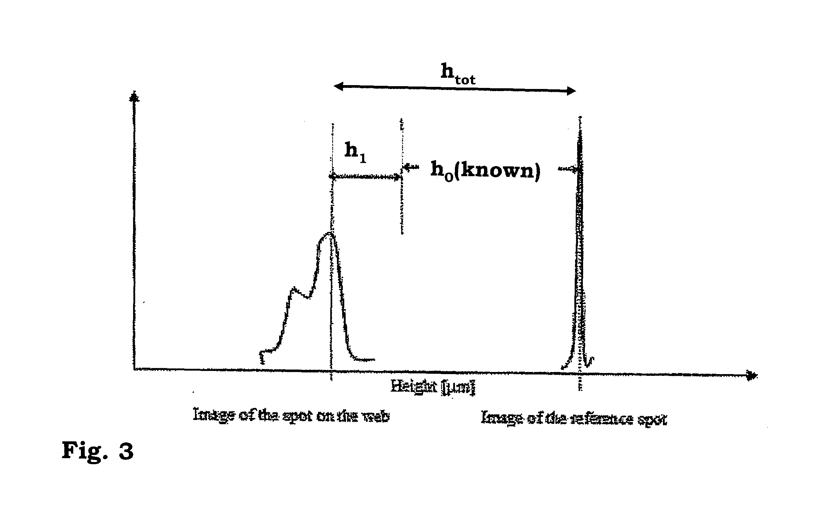

The split beam is focused on the transparent part of the surface of the sensor head and forms a small reference point. An optical triangulator operates by illuminating a patch of the surface and extracting a position of the centre of the laser spot from the measured intensity distribution at the image plane of the CCD. For example, in the case of measuring caliper of non-coated paper, the intensity distribution of the radiation reflected from the web is a sum of two distributions, i.e. distribution of the radiation that is reflected from the very surface and distribution of the secondary reflected radiation. Tilted illumination results in better separation of these distributions. In fig. 3 is shown the intensity distributions formed on the CCD array. Air gaps on each side of the web h₁ and h₂ can be estimated based on the distance between the maxima of the two distributions according to h₁ = htot - h₀, where h₀ is known and htot is obtained from the CCD array, where pixel numbers are scaled to height units. The air gap is related to the average height of the surface profile.

Because the air gaps on both sides are known by the intensity distributions obtained on each CCD array and because the distance d is known by data from the inductor coils, the thickness of the web may be calculated according to T = d - (h₁ + h₂).

Thus, the thickness of the moving web can be calculated very accurately by the present invention, and in particular when utilizing both light measurements and distance between the sensors. By monitoring the location of the reference spot on the CCD, it is also possible to obtain information about the movement of the sensor head. Because the light source and the beam splitter are of low weight, they will not influence the function and movement of the sensors. Another advantage with the present invention is that the CCD array and optics are arranged to the sturdy fixed structure, instead of being arranged on the sensors, their weight will not have any influence of the function and movement of the sensors and there is a freedom to choose the best suitable equipment without having to take weight aspects into account. Any vibrations or other types of movement of components will not affect the equipment because they are fixedly attached to the structure.

As an alternative to arranging laser light sources in the sensor heads, it is conceivable to use optical fibers as light guides. In this case the laser light source is also mounted on the study fixed structure and optical fibers are arranged from the light source and down to the sensor heads, where the end of the optical fiber is placed in about the same position and inclination as the laser light source mentioned above. Due to the flexibility of the optical fiber, it will not influence the movements of the sensor heads. Further the optical fibers are even lighter than the laser light source and will even less affect the movement of the sensor heads due to weight.

It is to be understood that the embodiment described above and shown in the drawings are to be regarded as only non-limiting example of the present invention and that it may be modified within the scope of the patent protection.

## Claims

1. Non-contact system for sensing and measuring a property or characteristic of a web material moving along a feed path, the system comprising
- a fixed support structure arranged with a passage through which the web material moves along the feed path,
- a first and second flexible mount attached to said support structure on a first side and second side of said feed path,
- a first and second sensor attached to said first and second flexible mount and positioned adjacent said first and second side of said feed path, where said first and second flexible mounts permit movement of said sensors relative to said feed path,
- first and second distance holding means, arranged and designed to be capable of holding said sensors substantially evenly spaced from said web passing along said feed path,
- said sensors further comprising measurement means capable of continuously measuring the distance (d) between said sensors, **characterised in that** it further comprises a light source arranged in each of said sensors, capable of emitting a light beam onto said web moving in said feed path at an inclined angle in relation to said web, that each sensor is arranged with a beam splitter, capable of diverting a part of said light beam,
- first and second light receiving means fixedly attached to said support structure adjacent said first and second sensors respectively, and arranged such that they are capable of receiving said diverted part of the light beam as well as light reflected from said web from the light beam emitted onto said web,
- means for calculating the air gap between each of said sensors and said web from information of the received light beams, and
- means for calculating the thickness of said web from the calculations of the air gaps and from the measured distance between the sensors.

2. System according to claim 1, wherein said light source comprises a laser light source arranged in said sensor heads.

3. System according to claim 1, wherein said light source comprises a laser light source arranged to the fixed structure and that an optical fiber is arranged between said laser light source and said sensor head, which optical fiber is capable of emitting a light beam from said laser light source onto said web moving in said feed path at an inclined angle in relation to said web.

4. System according to claim 1, wherein said light receiving means comprises a CCD array attached to said fixed structure capable of obtaining images of the diverted light beam as well as the reflected light beam.

5. System according to claim 4, wherein the light receiving means further comprises lens arrangements attached to said structure, capable of directing said light beams toward said CCD array.

6. System according to any of the preceding claims, wherein said light source and said beam splitter have low weight.

7. System according to any of the preceding claims, wherein said first and second sensors include means for receiving and directing pressurised gas toward said web when in said feed path, said first and second sensors being positioned opposite one another across said feed path, and at least one magnet mounted in each of said first and second sensors, said magnets being aligned with each other by magnetic coupling to urge said sensors toward said web and one another with said gas directed toward said web from said first and second sensors forming gas bearings to simultaneously urge said sensors away from said web, a net force generated by said magnets and said gas bearings keeping said sensors substantially evenly spaced from said web passing along said feed path.
